# EUROPEAN PATENT APPLICATION

(11) **EP 4 300 096 A1**
(43) Date of publication of application: **03.01.2024**
(21) Application number: 23181951.7
(22) Date of filing: 28.06.2023
(51) Int. Cl.: G01N 29/28, G01N 29/44

(54) **ULTRASONIC PROBE FOR NON-DESTRUCTIVE TESTING OF MATERIALS BY MEANS OF ULTRASONIC PULSES**

(30) Priority: 30.06.2022 IT 202200013822
(71) Applicant: GILARDONI S.p.A., 20124 Milano (IT)
(72) Inventor: Rosafio, Matteo, 23900 Lecco (LC) (IT); Sallemi, Damiano, 23826 Mandello del Lario (LC) (IT)
(74) Representative: Di Gennaro, Sergio

(57) **Abstract**

Ultrasonic probe for non-destructive testing of materials by means of ultrasonic pulses comprising a tubular casing (2) provided with at least one semi-annular support (3) comprising a plurality of ultrasonic transducers, an electronic equipment capable of controlling the ultrasonic beams generated by these transducers and to receive and analyse the signals of the returning echoes. Said ultrasonic transducers are angled so that the beam emitted by a first transducer (Tl), in the direction of the piece to be checked is refracted inside this material and at the same time reflected by the separation surface (S) between the support and the piece itself generating a first reflected signal (ERS) received by this first transducer (Tl), or that the beam emitted by a first transducer (Tl) in the direction of the piece is refracted inside this material and at the same time reflected by the separation surface (S) between the support and the piece, transmitted in the direction of a second transducer (T2), or in the direction of an artificial reflector (Rl) suitably arranged in the support (3) and further reflected back by said reflector in the direction of this first transducer (Tl), the second transducer (T2), or the first transducer (Tl) when the artificial reflector is present instead of the second transducer, receiving a second reflected signal (ERT). The electronic equipment is able of calculating at least one characteristic parameter of these first and second reflected signals and comparing said at least one parameter with a pre-set threshold value.

## Description

The present invention relates to an ultrasonic probe for non-destructive testing of materials by means of ultrasonic pulses.

Such technique is used to check if metal pieces have so-called "cracks," or defects, imperfections, and chinks therein. For example, such testing is used to check if railway axles are in correct conditions.

In the field of non-destructive testing with ultrasounds, piezoelectric transducers (ultrasonic probes) which, when suitably excited by a high-voltage pulse, generate ultrasounds which spread inside the piece to be checked, are employed. If the piece contains imperfections (for example cracks or inclusions), the ultrasound is reflected back to the starting transducer, which also acts as a receiver. This technique is known as Pulse Echo.

The ultrasonic control of a determined piece is carried out by contacting the ultrasonic probe with the same; thus, moving the probe on the entire piece allows to check the integrity thereof.

In order to allow the ultrasounds generated by the probe to penetrate inside the piece, it is necessary to interpose an acoustic couplant (usually an industrial oil) therebetween. The interposed layer of couplant interposed has a very critical role, since it affects the success of the control in each inspection point. It is thus important to have a manner to allow the operator carrying out the control to constantly evaluate the quality of the coupling: indeed, the absence of indications on the equipment screen related to reflected rays can mean:
a. Correct probe-piece coupling and absence of defects.
b. Incorrect probe-piece coupling and presence of defects.
c. Incorrect probe-piece coupling and absence of defects.

Among the above-identified three cases, b is the case that should not occur, as a possible defect is not detected in any way.

In the "Pulse Echo" ultrasonic non-destructive testing technique two main types of probes are usually used: longitudinal-wave normal-beam probes and transverse-wave angled-beam probes; the angle of the ultrasonic beam is referred with respect to the normal to the probe-piece interface surface.

For normal-beam longitudinal-wave probes, a manner to check the quality of the coupling is to evaluate the amplitude of the bottom echo produced by the reflection of the ultrasonic beam at the end of the piece (and thus the end of the inspection region of interest). This control can be carried out for each inspection point of the piece and for each ultrasonic pulse input therein (indeed, it often happens that a number of marked pulses can be emitted for a single inspection point of the piece; for example, if the moving speed of the probe on the piece is much lower than the PRF set on the ultrasonic fixture).

For transverse-wave angled probes, instead, monitoring the probe-piece coupling, using a bottom echo is almost never possible, since the end of the piece does not generate reflections going back to the probe, due to an incidence of the beam non-orthogonal on the bottom surface. In this situation, a reflection specular to the bottom surface moving the ultrasonic pulse away from the probe which emitted it occurs. Depending on the shape of the piece, there could be points where an echo generated by bottom reflection is available. However, the control of said echoes is only punctual and does not consider all the other inspection points of the piece.

In order to overcome such problem, the patent DE929153C (LUSCH) aims to use two ultrasonic transducers, one of which acts as a receiver adapted to receive the reflections of the ultrasonic beam sent by the other transmitter and reflected by the contact surface between probe and piece to be examined and to bring it in the direction of said further receiver. Analysing said reflected signal allows to understand if the probe is coupled.

The patent GB822898A (LUSCH2) discloses a probe structure which satisfies the indicated features comprising two ultrasonic transmission elements 11 and 22 and an artificial reflector 21, capable of conveying the reflected beam transmitted by the first element in the direction of the second element.

The problem of checking the probe-piece coupling for the angled probes is both in manual and automatized controls. An example is the control of hollow railway axles (both in operation and in production), in which by the Pulse Echo technique, a set of transverse-wave angled probes, installed within a single support referred to as OGIVA, control the inner and outer surfaces along the entire length of the axle looking for transverse and longitudinal (with respect to the axis of the axle) cracks and/or fractures. In this case, the control is carried out by the boring hole being in each axle, the only surface completely available during the controls in operation, in which the axle is installed in the train. The problem addressed by the present invention is how to construe the signal of the returning echo generated by the artificial reflector and/or by the second transducer, in order to have a certain indication of the coupling of the probe. The present invention proposes an ultrasonic probe for non-destructive testing of materials by means of ultrasonic pulses which overcomes the above-mentioned drawbacks.

An aspect of the present invention relates to an ultrasonic probe having the features of the attached claim 1.

Further features of the present invention are contained in the dependent claims. The features and advantages of the present invention will be more apparent from the following exemplary but non-limiting description of an embodiment of the invention, referred to the attached schematic drawings, in which:
- figure 1 illustrates a perspective view of a probe according to the present invention;
- figure 2 illustrates a partially exploded view of the probe of figure 1;
- figure 3 schematically illustrates one of the two bases of the probe of figures 1 and 2;
- figure 4 illustrates an operation scheme of the probe of figure 1;
- figures 5a-d illustrate four graphs related to four operation conditions of the probe.

With reference to the cited figures, the ultrasonic probe according to the present invention comprises a tubular casing 2, for example adapted to be inserted in the boring hole of a railway axle.

At least one semi-annular support (also referred to as base 3) comprising a plurality of ultrasonic transducers and an electronic equipment capable of controlling the ultrasonic beams generated by these transducers and to receive and analyse the signals of the returning echoes, is provided on such tubular casing 2.

Such transducers are angled so that the beam emitted by a first transducer T1, in the direction of the piece to be checked is refracted inside this material and at the same time reflected by the separation surface S between the support and the piece itself generating a first reflected signal received by this first transducer T1, or that the beam emitted by a transducer T1 in the direction of the piece is refracted inside this material and at the same time reflected by the separation surface S between support and the piece, transmitted in the direction of a second transducer T2 or in the direction of an artificial reflector R1 suitably arranged in the support 3 and further reflected back by said reflector in the direction of this first transducer T1, the second transducer T2 or the first transducer, when the artificial reflector is present instead of the second transducer, receiving a second reflected signal.

Such annular support is typically made of plastic material (for example Lucite or Plexiglass).

Preferably, the annular supports are two, 3 and 3', arranged opposite to each other with respect to the longitudinal axis X of the tubular casing 2 and in an intermediate position of the same.

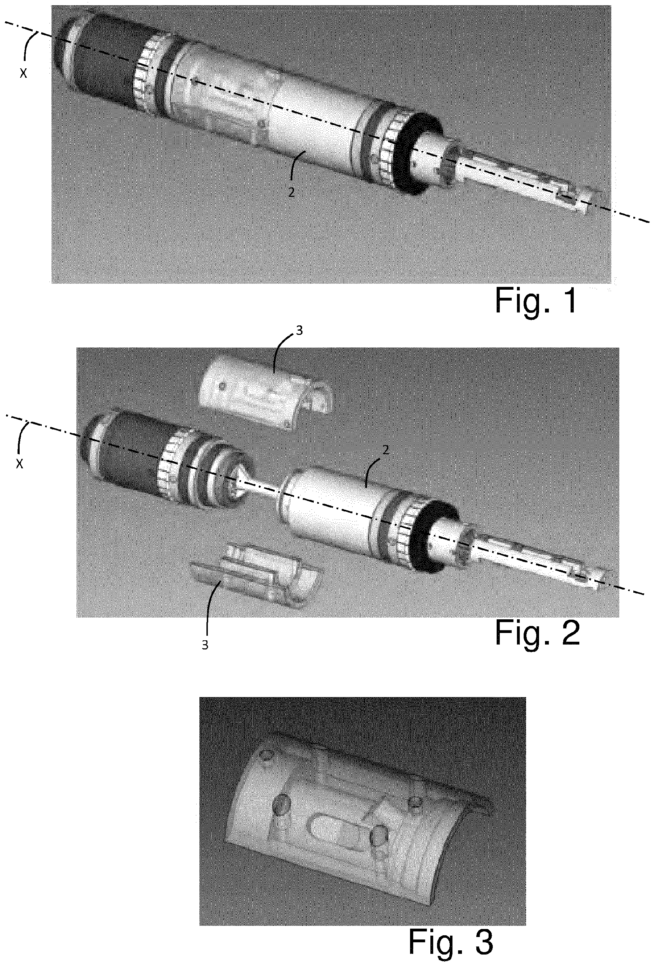

In the illustrated embodiment of the probe in figure 3 the transducers are three for each support 3 or 3'. In particular, there are two transducers T1 and T2 coupled with each other with angle of incidence of +45° and -45° and a third transducer T3 with angle of incidence of 70° coupling with an artificial reflector R1.

The casing further comprises motor means adapted to rotate the probe overall around the longitudinal axis X, so that the supports for transducers can send at 360° the ultrasonic beams along the entire axle.

The probe further comprises an elongated supporting element 4 adapted to promote the inserting and extracting of the tubular casing 2 from the hole of the axle. The probe further comprises means for delivering a couplant layer A (in particular liquid, for example oil) between the surface of the probe and the piece under examination.

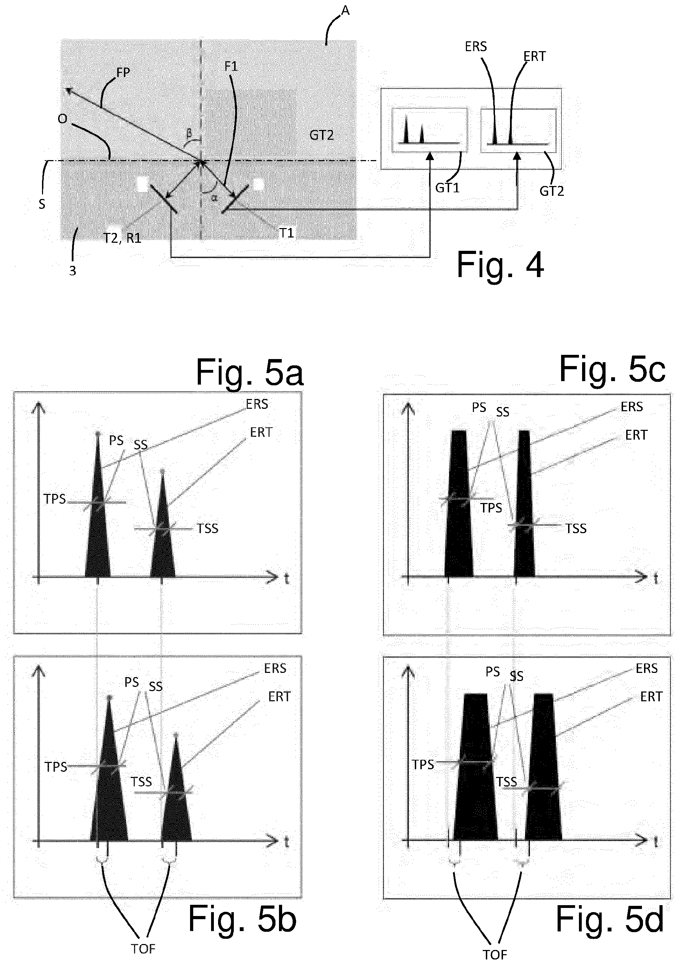

The operation scheme of the probe is particularly visible in figure 4 where:
- the piece to be inspected (for example hollow railway axle) is referred to as A;
- O represents the ultrasonic couplant layer (for example the oil veil);
- the support for the transducers t1 and t2 or for the artificial reflector R1 is referred to as 3;
- α - angle of incidence of the ultrasonic beam F1 emitted by the transducer T1 with longitudinal waves;
- β - angle of refraction of the beam FP penetrating the axle A in transverse waves obtained by the Snell's law;
- the graphs of the electric signals received by the transducers T1 and T2 by an ultrasonic equipment 4 associated with the probe are referred to as GT1 and GT2.

The probe operates as follows.

An ultrasonic beam F1 is emitted by the transducer T1 in the direction of the axle according to an angle α with respect to the axis of the separation surface S between axle and probe. Said beam is refracted (according to the Snell's law) and then proceeds inside the axle with angle β looking for structural defects in the piece.

Such first emitted beam F1 is also partially reflected back by the separation surface S in the direction of the first transducer T1 which receives it, due to the small distances involved inside the base, despite the fact that the incidence is not perpendicular. Said first reflected signal is referred to as ERS (echo reflected by the separation).

Such first emitted beam F1 is also partially reflected by the separation surface S in the direction of the second transducer T2 or the artificial reflector R1 which in turn reflects it back until returning in the direction of the first transducer T1 which receives it. Such second reflected signal is referred to as ERT (echo reflected by the transducer or the reflector).

Analysing such first and second reflected signal (registered by the same transducer in a prefixed time range) allows to understand if the probe is correctly coupled and, thus, if the echoes for reflecting the signal penetrating the axle (echo FP) are significant for evaluating possible defects in the structure of the axle itself.

In particular, in figures 5a-d four different situations, significant for said evaluation, are prospected.

In figures 5a and 5b the situation with non-saturated echoes of non-coupled probe (figure 5a) and correctly coupled probe (figure 5b) is illustrated, while in figures 5c and 5d the situation with saturated echoes of non-coupled probe (figure 5c) and correctly coupled probe (figure 5d) is illustrated.

A set of characteristic parameters has been identified for each signal, comprising at least the following parameters.

Amplitude of the echo or signal: indeed, the greater the energy associated with the beam input inside the piece under examination (due to refraction) is, the smaller the energy associated with the first ERS and second ERT reflected echoes is.

Reception time of the first and second echoes: when the probe is not correctly coupled, the times measured for the two echoes are lower than those measured in the case of correctly coupled probe. The shift is indicated on the time axis as TOF in figures 5a and 5b.

Time above threshold said parameter identifies how long the first and second echo signals remain above a respective set threshold thereof. Indeed, in the case of correct coupling of the probe, this parameter results greater than in the case of incorrectly coupled probe. This effect is caused by phenomena of interference in the oil layer, therefore when absent, the echo signals are narrower. For each echo (first ERS and second ERT) a threshold (first PS and second SS) is identified; the size of the time range TPS and TSS determines if the probe is coupled or not.

Step change of the signals: due to the involved acoustic impedances, it results a determined step of the signals in case of correct coupling, while the step is opposed if there is no coupling.

The electronic equipment associated to the probe can detect, by comparing at least one of such parameters pertaining to the set with a pre-set threshold value, the effective coupling of the probe with the piece to be inspected.

Preferably, the above-mentioned parameters pertaining to the set can be evaluated in any combination between them comparing them with respective threshold values.

Said parameters can be monitored in real time by the ultrasonic equipment, both at hardware level and software level, providing an indication of the status of the probe (coupled/non coupled) for each parameter. This indication (or flag) is determined selecting suitable windows within which the above-mentioned parameters should be so that the probe can be considered correctly coupled to the piece.

The monitoring of the parameters is carried out continuously for the entire duration of the inspection of the piece.

In the case in which it is revealed that the probe is not coupled at some point, the operation of inspecting the piece is interrupted.

The windows should be suitably selected as a function of the parameter and the geometry of the support. For example, the positioning of the transducers and the artificial reflector should be such that the (first and second) reflected echoes are not overlapping the refracted signal penetrating the piece, to avoid peak overlapping which does not allow to highlight the possible defect inside the axle.

According to the present invention, a method for detecting defects within metal pieces is made by the above-described probe, including the following steps:
a) sending a first ultrasonic beam in the direction of the metal piece to be checked,
b) receive at least one signal representative of the echo of this first beam reflected from the separation surface between the surface of the probe and the piece to be checked,
c) check if the probe is correctly coupled to the piece to be checked on the basis of the analysis of said at least one signal,
d) if the probe is correctly coupled, receive the echo of the first refracted beam inside the piece to be checked,
e) check from the analysis of this refracted beam the presence of defects in the piece under examination;
characterized in that step d) of verifying whether said probe is correctly coupled comprises:
- receive in the first transmitter (T1) a first signal generated by the echo of the reflection of the signal transmitted to phase a) of the separation surface between the surface of the probe and the piece to be checked,
- receive in the first transmitter (T1) or in the second transmitter (T2) a second signal generated by the echo of the reflection of the signal transmitted to phase a) of the separation surface between the surface of the probe and the piece to be checked in the direction of the second transmitter (T2) or towards the artificial reflector (R1),
- calculate at least one characteristic parameter of this first and second signal,
- compare this at least one characteristic parameter with a pre-set threshold value.

The base geometry illustrated in figures is such that there is a pair of opposed probes therein. This is a specific need in the case of controlling railway hollow axles. However, the inventions described here operate even when having only one transducer inside the base, since an artificial reflector can be made instead of the other (4 in figure 1) such that a reflected signal as indicated in figures 5a-d can be generated.

For example, the present invention can be equivalently used for monitoring T-welding or linear welding.

In the cases in which the base has two transducers (T1 and T2) arranged as illustrated, the second transducer can be used only as a receiver and the above-described parameters on the signal received by this transducer can be evaluated. Because of symmetry, then the roles of the two transducers can be inverted if necessary. In this case, it is necessary that the ultrasonic electronics associated with the probe can simultaneously manage two transducers.

Finally, it is possible to provide the graphs acquired by the transducers to an Artificial Intelligence hardware or software system, which provides as an output the indicator on the coupling status. The initial procedures of training the system and classifying a single acquired A-Scan can be made based on the single samples normally acquired by the probe, or on associated statistic parameters (for example, Root Mean Square, Skewness, Kurtosis, Crest Factor).

Following a suitable activity of initially training the system, based on the employed type of transducers (base geometry, probe frequency, etc.), the model is instructed to detect if a determined graph (or a part thereof) is based on a coupling, correct or not, between probe and piece.

## Claims

1. Ultrasonic probe for non-destructive testing of materials by means of ultrasonic pulses comprising
• a tubular casing (2) provided with at least one semi-annular support (3) comprising a plurality of ultrasonic transducers,
• an electronic equipment capable of controlling the ultrasonic beams generated by these transducers and to receive and analyse the signals of the returning echoes,
• said ultrasonic transducers being angled so that the beam emitted by a first transducer (T1), in the direction of the piece to be checked, is refracted inside this material and at the same time reflected by the separation surface (S) between the support (3) and the piece itself generating a first reflected signal (ERS) received by this first transducer (T1), or that the beam emitted by a first transducer (T1) in the direction of the piece is refracted inside this material and at the same time reflected by the separation surface (S) between support and the piece, transmitted in the direction of a second transducer (T2), or in the direction of an artificial reflector (R1) suitably arranged in the support (3) and further reflected back by said reflector in the direction of this first transducer (T1), the second transducer (T2), or the first transducer (T1) when the artificial reflector is present instead of the second transducer, receiving a second reflected signal (ERT),
**characterized in that**:
the electronic equipment is able to calculate at least one characteristic parameter of these first and second reflected signals and to compare this at least one parameter with a pre-set threshold value.

2. Ultrasound probe according to claim 1, in which such at least one characteristic parameter is included in a set of characteristic parameters which can be evaluated in any combination between them by comparing them with respective threshold values.

3. Ultrasound probe according to claim 1, in which one of the parameters of said set of characteristic parameters includes the amplitude of the echo or signal of said first and second signals.

4. Ultrasound probe according to claim 1, wherein one of the parameters of said set of characteristic parameters comprises the reception time of the first and second echoes.

5. Ultrasound probe according to claim 1, wherein one of the parameters of said set of characteristic parameters comprises the time for which the first and second signals remain above a set threshold.

6. Ultrasound probe according to claim 1, wherein one of the parameters of said set of characteristic parameters comprises the phase shift of the first and second signals.

7. Ultrasound probe according to claim 1, in which the monitoring of the parameters is carried out continuously for the entire duration of the inspection of the piece.

8. Method for detecting defects within metal pieces including the following steps:
a) sending a first ultrasonic beam in the direction of the metal piece to be checked,
b) receive at least one signal representative of the echo of this first beam reflected from the separation surface between the surface of the probe and the piece to be checked,
c) check if the probe is correctly coupled to the piece to be checked on the basis of the analysis of said at least one signal,
d) if the probe is correctly coupled, receive the echo of the first refracted beam inside the piece to be checked,
e) check from the analysis of this refracted beam the presence of defects in the piece under examination;
**characterized in that** step d) of verifying whether said probe is correctly coupled comprises:
• receive in the first transmitter (T1) a first signal (ERS) generated by the echo of the reflection of the signal transmitted to phase a) of the separation surface between the surface of the probe and the piece to be checked,
• receive in the first transmitter (T1) or in the second transmitter (T2) a second signal (ERT) generated by the echo of the reflection of the signal transmitted to phase a) of the separation surface between the surface of the probe and the piece to be checked in the direction of the second transmitter (T2) or towards the artificial reflector (R1),
• calculate at least one characteristic parameter of this first and second signal,
• compare this at least one characteristic parameter with a pre-set threshold value.

9. Method according to claim 8, in which such at least one characteristic parameter is included in a set of characteristic parameters which can be evaluated in any combination between them by comparing them with respective threshold values.

10. Method according to claim 8, in which this step d) comprises providing the graphs acquired by the transducers to an Artificial Intelligence system, which provides as an output the indicator on the coupling status.
